(19) **Europäisches Patentamt European Patent Office Office européen des brevets**

(11) **EP 2 577 163 B1**

(12) **FASCICULE DE BREVET EUROPEEN**

(45) Date de publication et mention de la délivrance du brevet:
**10.07.2019 Bulletin 2019/28**

(21) Numéro de dépôt: **11728314.3**

(22) Date de dépôt: **27.05.2011**

(51) Int Cl.:
***F23C 99/00*** *(2006.01)*  ***F23C 10/10*** *(2006.01)*
***F23C 10/00*** *(2006.01)*

(86) Numéro de dépôt international:
**PCT/FR2011/000317**

(87) Numéro de publication internationale:
**WO 2011/151537 (08.12.2011 Gazette 2011/49)**

(54) **DISPOSITIF DE SÉPARATION DE PARTICULES POUR UNE BOUCLE DE COMBUSTION CHIMIQUE**

**PARTIKELABSCHEIDER FÜR EINE CHEMICAL LOOPING COMBUSTION**

**PARTICLE SEPARATION DEVICE FOR CHEMICAL LOOPING COMBUSTION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2010 FR 1002326**

(43) Date de publication de la demande:
**10.04.2013 Bulletin 2013/15**

(73) Titulaires:
- **IFP Energies nouvelles**
  **92500 Rueil-Malmaison (FR)**
- **TOTAL RAFFINAGE CHIMIE**
  **92400 Courbevoie (FR)**

(72) Inventeurs:
- **HOTEIT, Ali**
  **F-75012 Paris (FR)**
- **GUILLOU, Florent**
  **F-69360 Ternay (FR)**
- **RIFFLART, Sébastien**
  **F-75012 Paris (FR)**
- **GAUTHIER, Thierry**
  **F-69530 Brignais (FR)**

(74) Mandataire: **IFP Energies nouvelles Département Propriété Industrielle Rond Point de l'échangeur de Solaize BP3 69360 Solaize (FR)**

(56) Documents cités:
| | |
|---|---|
| EP-A1- 0 606 716 | EP-A2- 0 211 483 |
| WO-A1-2009/121713 | FR-A1- 2 556 983 |
| FR-A1- 2 850 156 | FR-A1- 2 896 709 |
| GB-A- 2 052 032 | JP-A- 1 079 504 |
| US-A- 4 076 796 | US-A- 4 829 912 |
| US-A- 5 078 100 | |

## Description

### Domaine de l'invention

Le domaine de l'invention est celui de la séparation de particules, et plus précisément de particules d'oxydes métalliques, d'une part, et de particules d'imbrûlés associées éventuellement à des cendres volantes, d'autre part, dans le contexte de la combustion en boucle chimique pour produire de l'énergie, du gaz de synthèse et/ou de l'hydrogène.

### Art antérieur

La combustion en boucle chimique (en abréviation CLC pour Chemical Looping Combustion) consiste à mettre en contact, dans une enceinte à haute température, une charge hydrocarbonée gazeuse, liquide et/ou solide avec un solide de type oxyde métallique et porteur d'oxygène. L'oxyde métallique cède une partie de l'oxygène qu'il renferme, celui-ci participant à la combustion des hydrocarbures.

A l'issue de la combustion, les fumées contiennent majoritairement des oxydes de carbone, de l'eau et éventuellement de l'hydrogène. En effet, il n'est pas nécessaire de mettre en contact la charge hydrocarbonée avec de l'air et les fumées sont donc majoritairement composées des gaz de combustion et éventuellement d'un gaz de dilution servant au transport et à la fluidisation des particules ou un gaz (par exemple de la vapeur d'eau) favorisant la gazéification de combustible solide.

Ainsi, il est possible de produire, après condensation, des fumées exemptes majoritairement d'azote et contenant des teneurs en $CO_2$ élevées (généralement supérieures à 90% vol., voire 98%) permettant d'envisager le captage, puis le stockage de $CO_2$. L'oxyde métallique ayant participé à la combustion est ensuite transporté vers une autre enceinte réactionnelle où il est mis en contact avec de l'air pour être réoxydé.

La mise en oeuvre d'un procédé de combustion en boucle chimique requiert des quantités d'oxydes métalliques importantes pour brûler la totalité du combustible. Ces oxydes métalliques sont généralement contenus, soit dans des particules de minerai, soit dans des particules résultant de traitement industriels (résidus de l'industrie sidérurgique ou minière, catalyseurs usagés de l'industrie chimique ou du raffinage). On peut également utiliser des matériaux synthétiques, tels que par exemple des supports d'alumine ou de silice-alumine sur lesquels des métaux pouvant être oxydés auront été déposés (nickel par exemple). La capacité maximale d'oxygène réellement disponible varie considérablement d'un oxyde à l'autre, et est généralement comprise entre 0,1 et 15%, et souvent entre 0,3 et 6% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, ainsi qu'entre ces enceintes, si l'on confère aux particules les propriétés d'un fluide.

La demande de brevet FR 2 850 156 décrit un procédé de combustion en boucle chimique pour lequel le combustible est broyé avant l'entrée dans le réacteur de réduction fonctionnant en lit fluidisé circulant. La taille réduite des particules de combustible solide permet une combustion plus complète et plus rapide. La séparation en aval du lit circulant est d'abord assurée par un cyclone puis par un dispositif permettant de séparer les particules d'imbrûlés des particules d'oxyde métallique. Ainsi, on évite l'entraînement d'imbrûlés dans la zone d'oxydation et donc les émissions de $CO_2$ dans les effluents du réacteur d'oxydation.

Le dispositif de séparation est fluidisé par de la vapeur d'eau, qui permet de séparer les particules fines et légères, telles que le résidu carboné, et de réintroduire ce dernier dans le réacteur, tandis que les particules plus denses et plus grosses d'oxydes sont transférées vers le réacteur d'oxydation.

La demande de brevet FR 2 896 709 a pour objet un séparateur de particules fonctionnant dans un procédé en boucle chimique. Ce séparateur est alimenté par le flux de particules transportant l'oxygène et mélangées au combustible solide. Dans le séparateur, les particules s'écoulent en phase dense en suivant un chemin tortueux et en passant au travers de chicanes, ce qui permet de contrôler le temps de séjour et de favoriser la séparation des particules légères (particules d'imbrûlés) des particules lourdes (oxydes métalliques). Les particules sont ensuite introduites dans une zone de fluidisation, ladite fluidisation étant contrôlée par des moyens situés à la base du séparateur mais aussi en paroi des déflecteurs, ce qui permet d'entraîner les particules les plus légères qui sont ensuite recyclées vers le réacteur de fluidisation.

Le fonctionnement du séparateur selon FR 2 896 709 induit plusieurs inconvénients non négligeables.

Ainsi, l'efficacité de séparation est réduite compte tenu d'une limitation au niveau de la capacité d'entraînement des particules dans la phase gazeuse. En effet, pour entraîner des quantités de particules importantes, il faut mettre en oeuvre des quantités de gaz ainsi que des sections libres importantes.

De plus, en phase dense, il est impossible de séparer totalement deux phases solides différentes. En effet, le mouvement ascendant des bulles de gaz provoque paradoxalement une redescente des particules légères vers la phase dense et empêche une séparation totale.

En outre, la géométrie du séparateur de FR 2 896 709 est très compliquée de par la présence d'internes, notamment des internes asymétriques. Cette géométrie est problématique compte tenu des contraintes mécaniques que subissent les matériaux constituant le séparateur dans les conditions de température du procédé CLC, généralement au delà de 800°C. En effet, si les parois externes sont souvent protégées par un ciment réfractaire et restent à basse température, ce n'est pas le cas des parois internes qui sont portées aux conditions du procédé.

Le document FR 2 556 983 A1 décrit un procédé de traitement de matières en lit fluidisé avec extraction de produits solides.

Le document WO 2009/121713 A1 décrit un procédé d'utilisation d'une installation de combustion en boucle chimique comprenant un dispositif de séparation à rendement inférieur recevant des matières solides entraînées à partir du réacteur de réduction d'oxyde, le courant supérieur des matières solides du dispositif de séparation à rendement inférieur étant amené à circuler dans un dispositif de séparation à rendement supérieur, afin de séparer les matières solides des gaz et de réintroduire les matières solides dans le réacteur de réduction d'oxyde.

Le document EP 0 211 483 A2 décrit un procédé de fonctionnent d'un réacteur à lits fluidisés permettant notamment d'effectuer une séparation grossière des particules en amont de la phase de dépoussiérage.

Les demandeurs ont développé un nouveau séparateur dans lequel le mélange de particules provenant de la zone de combustion est mis au contact d'un flux gazeux provenant de la zone de combustion et/ou d'une source gazeuse externe. Ce mélange entre ensuite dans la phase diluée du séparateur. Dans le séparateur, la vitesse de l'écoulement gazeux est contrôlée de façon à permettre la sédimentation des particules les plus lourdes (essentiellement des particules d'oxydes métalliques), les particules les plus légères (essentiellement des particules d'imbrûlés) étant entrainées vers la partie supérieure du séparateur pour être recyclées vers la zone de combustion.

Le séparateur selon l'invention présente une efficacité améliorée de séparation des particules d'imbrûlés et des particules d'oxydes métalliques.

De plus, la conception relativement simple du séparateur permet de s'affranchir des problèmes liés aux contraintes thermiques.

A cet effet, la présente invention concerne un dispositif de combustion en boucle chimique selon la revendication 1.

L'enceinte du séparateur peut comprendre en outre une conduite d'alimentation pour un gaz provenant d'une source externe.

La conduite de sortie est reliée à un séparateur gaz-solide pour évacuer un gaz appauvri en particules d'imbrûlés par une conduite, et recycler les particules d'imbrûlés par une conduite de communication avec la zone de combustion.

La conduite d'admission pénètre dans l'enceinte de manière sensiblement axiale et peut être d'une longueur comprise entre 1 à 5 fois le diamètre de l'enceinte.

La conduite d'admission peut pénétrer par la partie inférieure de l'enceinte.

La partie inférieure de l'enceinte peut comprendre un espace annulaire entre la paroi externe de la conduite d'admission et la paroi du séparateur.

La zone de combustion peut comprendre au moins une conduite d'alimentation en charge solide, une conduite d'alimentation en particules de porteur d'oxygène, une conduite d'alimentation en gaz de fluidisation, pour former ledit mélange gazeux.

L'invention concerne également un procédé de combustion en boucle chimique selon la revendication 7.

L'enceinte du séparateur peut être alimentée par un gaz provenant d'une source externe.

La vitesse superficielle du gaz dans la phase diluée de l'enceinte du dispositif peut être fixée à une valeur comprise entre 30 et 300% de la vitesse terminale de chute moyenne des particules de porteur d'oxygène.

La vitesse superficielle du gaz dans la phase diluée de l'enceinte du dispositif peut être fixée à une valeur comprise entre 75 et 125% de la vitesse terminale de chute moyenne des particules de porteur d'oxygène.

La vitesse du gaz dans la partie supérieure de la zone de combustion peut être comprise entre 3 et 10 m/s.

Le séparateur est placé au dessus de la zone de combustion.

L'enceinte peut être alimentée par un gaz provenant d'une source externe représentant moins de 20% du débit de gaz total dans le séparateur.

La zone de combustion peut opérer en lit fluidisé en phase dense dont les particules sont transportées vers le séparateur, le transport étant contrôlé par une vanne en L.

La zone de combustion peut opérer en lit fluidisé en phase dense dont les particules sont transportées vers le séparateur au travers d'un séparateur gaz/solide à la sortie duquel les particules s'écoulent à l'intérieur du séparateur.

## Description détaillée

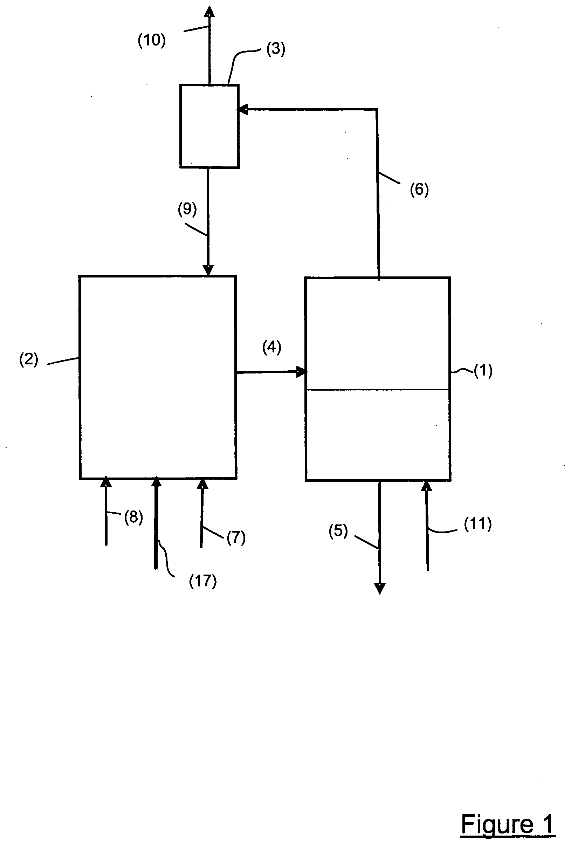

L'invention est illustrée à l'aide des figures 1 à 5 qui représentent, uniquement à titre d'exemple et de manière non limitative, différentes mises en oeuvre et intégration du dispositif selon l'invention à la sortie d'une zone de combustion d'une unité CLC.

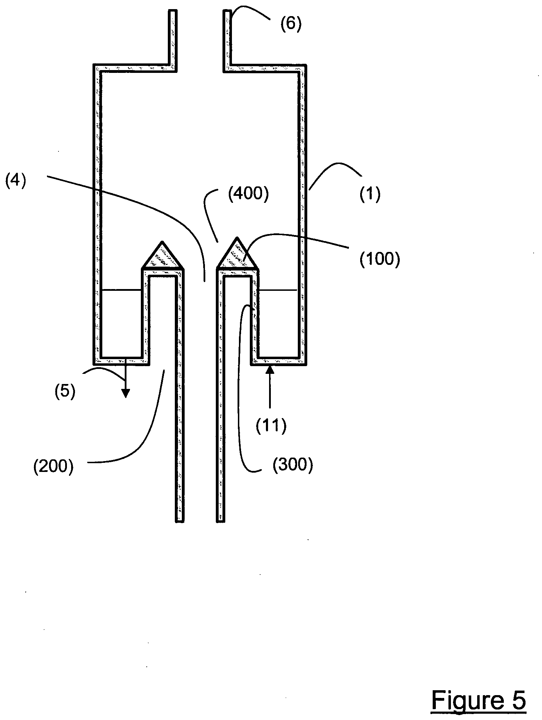

La figure 5 illustre une géométrie particulière du dispositif selon l'invention.

La figure 1 décrit un exemple de dispositif, ne faisant pas partie de l'invention, intégré dans un schéma global.

La zone (2) représente la zone de combustion d'un procédé de combustion en boucle chimique (CLC : abréviation pour le groupe de mots anglais Chemical Looping Combustion) dans laquelle sont introduits une charge solide par une conduite (7), des particules de porteur d'oxygène par une conduite (8) provenant de la zone d'oxydation (non représentée) du procédé CLC et un gaz de fluidisation amené par une conduite (17) tel que, par exemple, de la vapeur d'eau ou du $CO_2$ pour favoriser la fluidisation des particules d'oxydes.

La charge (ou combustible) solide traitée dans la zone de combustion est généralement constituée d'une source solide hydrocarbonée contenant majoritairement du carbone et de l'hydrogène. La charge est avantageusement choisie parmi le charbon, le coke, le pet-coke, la biomasse, les sables bitumineux et les déchets ménagers.

Cette zone de combustion (2) peut fonctionner dans un lit fluidisé en phase dense ou en lit fluidisé circulant ou bien encore selon un agencement de lits constitués d'une phase dense et d'une phase de transport.

De manière avantageuse, la vitesse du gaz dans la partie supérieure de la zone de combustion est comprise entre 3 et 10 m/s.

Un flux de particules contenant des particules d'oxydes métalliques, dites particules lourdes, et des particules légères comprenant des particules d'imbrûlés et éventuellement des cendres volantes, le tout dans un flux gazeux est extrait de la zone (2) pour être est ensuite introduit dans un séparateur (1) par une conduite d'admission (4).

Le flux gazeux provient totalement ou en partie de la zone de combustion (2) et est majoritairement constitué de CO, $CO_2$, $H_2$ et $H_2O$, le complément peut provenir d'une source extérieure contenant par exemple du $CO_2$ recyclé et/ou de la vapeur d'eau, introduite par le conduit (11) en partie inférieure du séparateur (1).

De manière préférée, on utilise tous les effluents gazeux de combustion pour la séparation et de manière très préférée, il est constitué à au moins 80% des effluents de la zone de combustion.

La séparation entre les particules lourdes et les particules légères a lieu dans ce séparateur (1), les particules lourdes se déposant dans la partie inférieure du séparateur avant d'en être extraites par une conduite d'évacuation (5), et les particules légères étant entraînées vers la partie supérieure avant d'être extraites par une conduite de sortie (6) puis d'être introduites dans un séparateur gaz-solide (3), par exemple un cyclone.

Ce cyclone a pour but de séparer le gaz appauvri en particules d'imbrûlés qui est ensuite extrait par une conduite (10) et les particules d'imbrûlés entraînées avec les particules d'oxydes métalliques extraites par une conduite (9) et recyclées vers la zone de combustion (2).

Les particules lourdes extraites en partie inférieure du séparateur sont constituées majoritairement d'oxydes métalliques et peuvent être envoyées vers une seconde zone de combustion dans laquelle le porteur d'oxygène sera plus réduit, ou vers une zone d'oxydation permettant au porteur d'oxygène de retrouver au moins une partie du degré d'oxydation qu'il avait à l'entrée de la zone de combustion (2) et les particules d'imbrûlés plus légères sont recyclées vers la zone de combustion, après séparation de l'effluent gazeux. Ainsi, les paramètres d'admission et d'évacuation/sortie sont choisis pour créer dans l'enceinte une phase dense en partie inférieure et une phase diluée en partie supérieure, et la conduite d'admission (4) débouche dans la phase diluée.

Les particules qui sédimentent dans la partie inférieure forment une phase dense constituée des particules les plus lourdes, de hauteur plus ou moins importante dans le séparateur en fonction, entre autres, de la densité des particules, des débits d'alimentation et d'extraction mais le niveau de ladite phase dense, formant l'interface avec la phase diluée, est dans tous les cas situé en dessous de l'admission (4) débouchant dans le séparateur permettant l'introduction du mélange de particules extrait de la zone de combustion.

Par cela, en introduisant le mélange de particules extrait de la zone de combustion dilué dans un flux gazeux - la fraction volumique des particules dans le courant gazeux étant généralement inférieure à 5%, de préférence entre 1 et 2% - dans la phase diluée du séparateur selon l'invention, il est possible d'obtenir une séparation rapide avec une meilleure efficacité de séparation possible, d'une part, des particules de porteur d'oxygène qui sédimentent dans la partie inférieure, ou phase dense, dudit séparateur, et d'autre part, des particules d'imbrûlés, éventuellement de cendres volantes et du gaz, qui sont entraînés dans la partie supérieure, ou phase diluée, dudit séparateur, tout en ayant une bonne efficacité de séparation.

Par séparation rapide, on entend une séparation s'opérant en moins de 1 minute et préférentiellement en moins de 20 secondes, cette durée correspondant au temps de séjour des particules légères dans la phase diluée du séparateur.

Par paramètres, il est entendu toutes les conditions permettant de contrôler la circulation du fluide et/ou des solides concernés, comme la vitesse, le débit, la masse,...

La phase diluée présente généralement un taux de solide inférieur à 5%, voire inférieur à 1 % vol.

On peut alors définir l'efficacité de séparation par la formule :

X= quantité de particules d'imbrûlés entraînées avec le gaz / quantité totale de particules d'imbrûlés dans le mélange de particules entrant dans le séparateur

Grâce à l'invention, une efficacité de séparation généralement supérieure à 70%, voire supérieure à 80%, peut être obtenue.

De par cette bonne efficacité de séparation, il est possible d'optimiser le taux de captage du $CO_2$ à une valeur supérieure à 90%, celui-ci étant défini par le ratio quantité de $CO_2$ émis au niveau de la zone de combustion /quantité totale de CO2 émis dans la boucle CLC.

De plus, la vitesse superficielle de l'écoulement dans la zone de séparation doit être supérieure à la vitesse terminale de chute des particules de combustible imbrûlées pour permettre leur entraînement avec le gaz.

La vitesse superficielle du gaz dans la phase diluée de la zone de séparation est fixée à une valeur généralement comprise entre 30 et 300% de la vitesse terminale de chute moyenne des particules de porteur d'oxygène, de préférence comprise entre 75 et 125%. Pour cette plage de vitesse, le flux de particules entraîné dans la phase diluée du séparateur reste inférieur à 5 kg/s/m2, de préférence inférieure à 1 kg/s/m2.

La vitesse terminale de chute moyenne est obtenue à partir de la formule(*):

$$Vt= \ (\frac{4d_p(\rho_s - \rho_g)g}{3\rho_g C_D})^{1/2}$$

où:

d$_p$ est le diamètre moyen des particules
$\rho_s$ est la masse volumique des particules (kg/m$^3$)
$\rho_g$ est la masse volumique du gaz (kg/m$^3$)
C$_D$ le coefficient de traînée

(*): extraite de Fluidization Engineering, Butterworth-Heinemann, Daizo Kunii, Octave Levenspiel, p.80).

La géométrie du séparateur peut être parallélépipédique, cylindrique ou toute autre géométrie tridimensionnelle et de préférence celle-ci présente une symétrie de révolution. En général, le matériau utilisé pour réaliser l'enceinte du séparateur peut être choisi parmi les aciers spéciaux tels que l'hastelloy ou bien encore les céramiques.

Pour limiter les couts de fabrication, il est également possible de considérer pour les parties externes du séparateur des aciers standards sur lesquels on aura déposé des couches de ciment réfractaire armé (avec des épaisseurs généralement comprises entre 2 et 50 cm, généralement voisines de 20 cm) sur les faces internes exposées à l'écoulement et aux hautes températures.

Lorsque la géométrie du séparateur présente une symétrie de révolution, le débouché de la conduite (4) pénètre dans l'enceinte sur une profondeur axiale préférablement comprise entre 1 à 5 fois le diamètre de l'enceinte, de préférence de 1 à 2 fois le diamètre de l'enceinte.

De plus, lorsque l'enceinte présente une symétrie de révolution, la hauteur de l'enceinte disponible au dessus du débouché de la conduite d'admission (4) dans l'enceinte est en général comprise entre 1,5 à 10 fois le diamètre de l'enceinte.

Les particules d'oxydes métalliques, tels que par exemple des oxydes de Fe, Ti, Ni, Cu, Mn, Co, V, sont utilisés seules ou en mélange, et ont une taille moyenne en général supérieure à 50 microns, de préférence comprise entre 100 et 500 microns.

Les oxydes métalliques, synthétiques ou minéraux, supportés ou non, ont en général une masse volumique supérieure à 1500 kg/m$^3$. Par exemple, les particules d'oxyde de nickel supportées sur alumine ($NiO/NiAl_2O_4$) présentent généralement une masse volumique de grain comprise entre 2500 et 3500 kg/m$^3$ en fonction de la porosité du support et de la teneur en oxyde de nickel, typiquement de 3200 kg/m$^3$ environ.

L'ilménite, minerai associant le titane et le fer, présente une masse volumique de 4700 kg/m$^3$.

Le dispositif de séparation selon la présente invention est avantageusement utilisé pour séparer des particules d'imbrûlés de particules d'oxydes métalliques présentant une masse volumique supérieure à 2500 kg/m$^3$, de préférence supérieure à 4000 kg/m3.

Les particules de transporteur d'oxygène ont en général une taille et une masse volumique bien plus importantes que celles des cendres volantes et des particules d'imbrûlés ayant déjà été au contact des particules transportant l'oxygène dans la zone de combustion à haute température. En sortie de la zone de combustion, on estime que la taille des particules imbrûlées de charbon est inférieure à 100 microns et que la majorité des particules a une taille inférieure à 50 microns. La masse volumique de ces particules est en général comprise entre 1000 et 1500 kg/m$^3$.

D'autres particules comme les cendres volantes résultant de la combustion de la charge solide peuvent également circuler avec le reste des particules et sont caractérisées par une taille de particules et une masse volumique plus faibles que les particules de porteur d'oxygène et souvent plus faibles également que les particules d'imbrûlés.

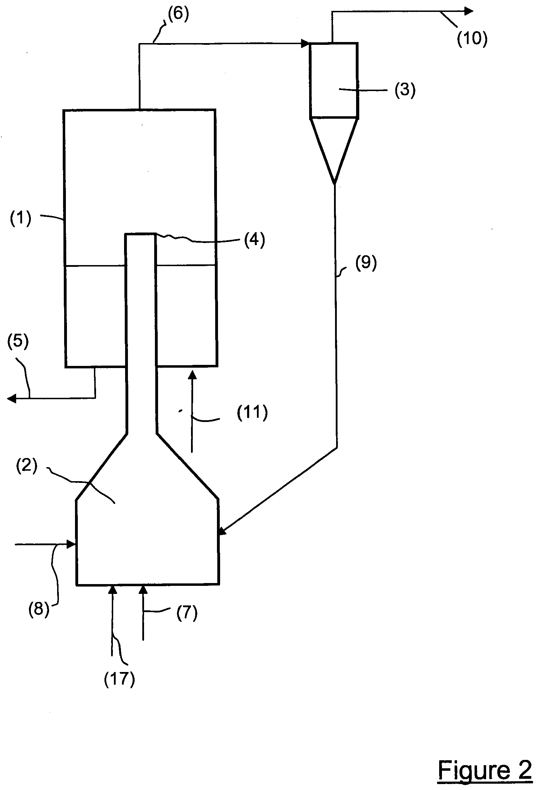

La figure 2 décrit l'invention et diffère de la figure 1 en ce que le conduit d'admission (4) débouche de manière axiale directement dans le séparateur (1) qui est placé au dessus de la zone de combustion (2).

Selon ce mode de réalisation, la partie supérieure de la zone de combustion est rétrécie, ce qui permet d'accélérer et de transporter le mélange gaz-particules sortant de la zone de combustion, et comprenant des fumées de combustion, des particules d'imbrûlés et éventuellement des cendres volantes.

La vitesse du gaz dans la partie supérieure de la zone de combustion est préférentiellement comprise entre 3 et 10 m/s et le flux de particules transportées dans cette partie est compris entre 25 et 500 kg/s/m$^2$, de préférence entre 60 et 300 kg/s/m$^2$.

Le conduit (4) débouche dans le séparateur dans une phase diluée composée essentiellement de gaz (au moins 95% en volume). De par la vitesse imposée du gaz dans le séparateur (1), les particules lourdes sédiment dans la partie inférieure du séparateur et sont extraites par la conduite (5), alors que les particules légères sont entraînées dans la partie supérieure du séparateur (1) et sont évacuées par la conduite (6).

Le flux de particules légères entraînées rapporté à la section du séparateur (1) est inférieur à 5 kg/s/m$^2$, est généralement compris entre 0,02 et 1,0 kg/s/m$^2$ et contient au moins 50% des particules d'imbrûlés issues de la zone de combustion (2).

Il peut être envisagé de former une phase dense fluidisée dans la partie inférieure du séparateur (1), à condition que le niveau de l'interface entre la phase dense et la phase diluée soit maintenu en dessous de l'extrémité du conduit (4) débouchant dans le séparateur (1).

Dans ce cas, la fluidisation de la phase dense est opérée par appoint d'un gaz externe à la zone de combustion par un conduit (11). Ce gaz traverse la zone de séparation (1) et participe avantageusement au processus physique de séparation des particules avant de sortir du séparateur par la conduite (6).

Les autres éléments de la figure 2 sont analogues à ceux de la figure 1 portant le même numéro de référence.

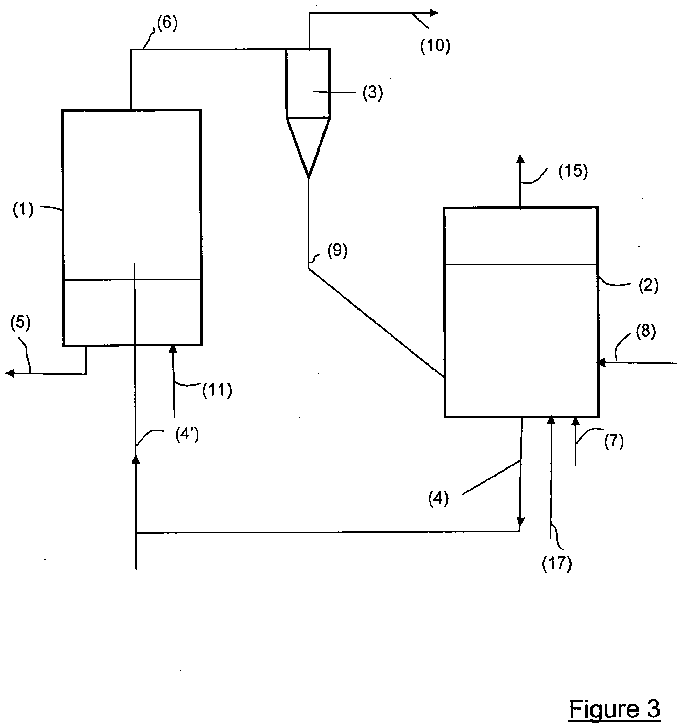

La figure 3 diffère de la figure 2 en ce que la zone de combustion (2) dans laquelle la charge solide introduite par la conduite (7) est brûlée au contact des particules de porteur d'oxygène amenées par une conduite (8) dans un lit fluidisé en phase dense, la fluidisation étant opérée grâce à l'introduction d'un gaz amené par une conduite (17) et contenant par exemple de la vapeur d'eau et/ou du dioxyde de carbone. Les fumées de combustion sont évacuées de la zone de combustion (2) par un conduit (15) situé dans la partie supérieure du lit fluidisé de cette zone.

Selon cette configuration, les particules sont soutirées dans la phase dense du lit fluidisé et transportées indépendamment des fumées de combustion dans des conduites (4) et (4') vers la zone de séparation (1). Les moyens de transport représentés par les conduites (4) et (4') incluent par exemple un dispositif de soutirage en phase dense, un tube vertical dans lequel les particules s'écoulent vers le bas, une vanne non mécanique, de type vanne en L, permettant de contrôler le débit de particules par injection contrôlée d'un gaz d'insufflation en amont d'un coude dans un lift de transport dans lequel un gaz externe à la zone de combustion (2) est injecté pour transporter les particules.

Selon ce mode de réalisation, les particules arrivent donc dans le séparateur (1) en présence d'un gaz permettant leur transport ascendant.

Le mélange gaz-particules issu de la zone de combustion (2) débouche dans le séparateur (1) par l'extrémité du conduit (4') dans une phase diluée constituée essentiellement de gaz (au moins 95% en volume) dans laquelle la vitesse superficielle est contrôlée par ajout de gaz par la conduite (11).

L'ajustement de la vitesse superficielle dans le séparateur (1) permet de contrôler la quantité de particules entraînées vers la sortie (6). Les particules non entraînées vers cette sortie (6) sédimentent dans la phase dense du séparateur (1) et sont collectées dans la partie inférieure du séparateur (1) et évacuées par une conduite (5) vers une autre zone réactionnelle.

Les autres éléments de la figure 3 sont analogues à ceux de la figure 2 portant le même numéro de référence.

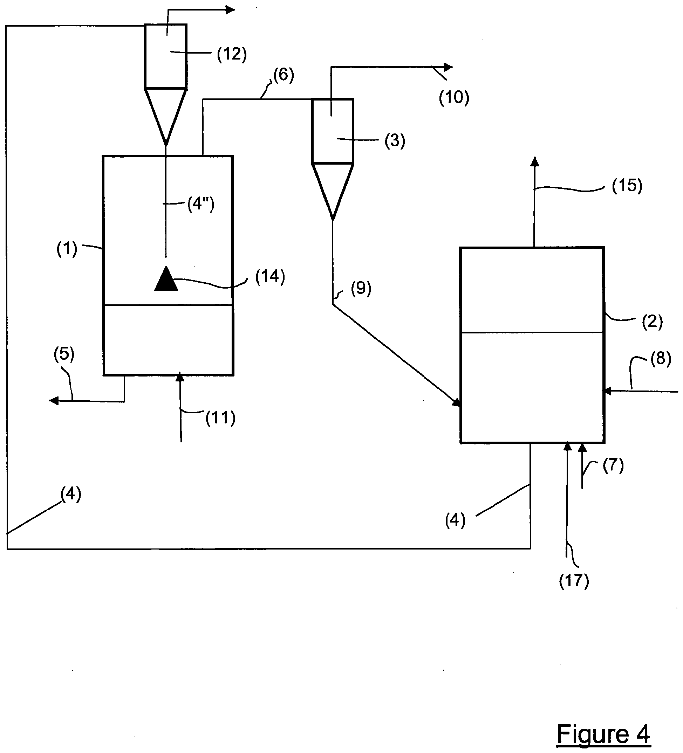

La figure 4 décrit un autre mode de réalisation de l'invention, qui diffère de celui de la figure 3 par le fait que les particules rentrant dans le séparateur (1) sont introduites à partir d'un conduit descendant (4") dans lequel les particules arrivent dans un mode de transport descendant en phase dense, le mouvement des particules dépendant de la gravité et non de la vitesse du gaz environnant.

Pour ce faire, une séparation préalable du mélange transporté dans le conduit d'admission (4) est réalisée, par exemple dans un séparateur gaz-solide (12). Les particules solides s'écoulent ensuite par la conduite (4") à l'intérieur du séparateur (1) et sont réparties sur toute la section du séparateur (1) grâce à un déflecteur (14), tel que par exemple un "chapeau chinois", avec un cône évidé de section plus importante que celle du conduit (4"). Du fait de ce nouveau mode d'introduction, le gaz participant à la séparation des particules dans le séparateur (1) est introduit en quasi totalité à la base de l'enceinte par un conduit (11), le gaz interstitiel introduit par le conduit (4") avec les particules représentant une quantité négligeable. Le gaz introduit par le conduit (11) traverse éventuellement une phase dense de particules fluidisées, le niveau de cette phase dense étant maintenu sous le déflecteur (14) de façon à ce que les particules entrant dans le séparateur s'écoulent dans la phase diluée.

La figure 5 décrit une géométrie particulière du dispositif selon l'invention. Celui-ci comprend dans sa partie inférieure un évidement circulaire ou espace annulaire (200) entre la paroi de la conduite (4) débouchant en phase diluée et la paroi externe (300) du séparateur située sur le plus petit diamètre. De cette façon, toutes les surfaces du dispositif comportent une face extérieure, qui peut être facilement refroidie, et il est possible de recouvrir toutes les faces internes avec un ciment réfractaire (100). Dans ces conditions, les parois externes ne sont plus exposées à des niveaux de température importants et sont protégées des contacts avec les courants de gaz et de particules. Il est ainsi possible d'utiliser des aciers bon marché pour réaliser le dispositif, ce qui est très avantageux pour les dispositifs de grande taille (dès que le diamètre interne du conduit (4) est supérieur à 15 cm). De plus, en adaptant la forme du dépôt de matériau réfractaire déposé à la sortie de la conduite (4), il est possible de générer un divergent (400) permettant d'homogénéiser le profil de vitesse sur toute la section du dispositif.

Exemple (selon l'invention):

La mise en oeuvre de l'invention est illustrée selon le mode associé à la figure 2.

Les essais visant à quantifier la performance du dispositif selon l'invention ont été conduits sur une maquette froide simulant les écoulements.

La maquette comprend un tube de transport d'un diamètre interne de 2 cm, dans lequel les particules sont transportées par de l'air dans les conditions ambiantes, l'air simulant les fumées de combustion.

Le tube de transport débouche dans la phase diluée d'une enceinte cylindrique de séparation de section constante (diamètre interne de 12,5 cm). Le tube pénètre dans l'enceinte sur une profondeur de 20 cm, ce qui laisse une hauteur de 80 cm au dessus de la sortie du conduit dans la phase diluée pour effectuer la séparation. L'enceinte de séparation est équipée à sa base d'une boite de distribution de gaz permettant la fluidisation des particules autour du conduit de transport. Le niveau de la phase dense fluidisée est maintenu sous la sortie du conduit de transport débouchant dans l'enceinte de séparation.

La vitesse superficielle du gaz dans la phase diluée au dessus de la sortie du tube de transport est appelée Vsg.

La vitesse de gaz dans le tube de transport est égale à 3m/s.

Le débit de solides circulant dans le tube de transport, alimentant la zone de séparation est égal à 140 kg/h, ce qui correspond à un flux de 123 kg/s/m$^2$.

La concentration massique en particules légères dans l'ensemble des particules entrant dans le séparateur est appelée CI.

La séparation entre particules a été simulée dans les conditions ambiantes en utilisant deux types de particules:

- des particules de transporteur d'oxygène constitué d'un minerai lourd de fer et de titane (ilménite), dont les propriétés sont les suivantes:

  - diamètre de particules moyen, diamètre de Sauter: 112 microns
  - masse volumique de particules: 4740 kg/m3
  - vitesse terminale de chute moyenne aux conditions: 1,07 m/s

- des particules de catalyseur de FCC, plus petites et moins denses, simulant les particules de coke ou de charbon imbrulées aux conditions du procédé, dont les propriétés sont les suivantes:

  - diamètre de particules moyen, diamètre de Sauter: 52 microns
  - masse volumique de particules:1450 kg/m3
  - vitesse terminale de chute moyenne aux conditions = 0,12 m/s

Dans le tableau ci dessous, ont été reportées les efficacités de séparation (E%) des particules légères de FCC correspondant à la fraction de ces particules entraînées dans la sortie gaz du séparateur par rapport à la quantité de particules entrant dans le séparateur.

| Vsg (m/s) | 1,00 | 1,10 | 1,10 | 1,10 |
|-----------|------|------|------|------|
| CI (%)    | 1,0  | 1,0  | 2,0  | 2,0  |
| E(%)      | 73,6 | 88,5 | 78,2 | 89,9 |

On constate que si la vitesse superficielle dans la phase diluée est proche de la vitesse terminale de chute des particules lourdes (1,07 m/s en moyenne), alors l'efficacité de séparation est importante. Ainsi, lorsque la vitesse du gaz dans la phase diluée est de 1,0 ou 1,1 m/s, l'efficacité de récupération des particules légères peut être supérieure à 70%.

**Revendications**

1. Dispositif de combustion en boucle chimique utilisant un combustible solide générant des particules d'imbrûlés et mettant en oeuvre des particules de porteur d'oxygène, telles que des oxydes métalliques, et comportant au moins une zone de combustion (2), un séparateur (1) des particules contenues dans un mélange gazeux provenant de ladite zone de combustion, et un séparateur gaz-solide (3) dans lequel :

   - le séparateur de particules (1) est placé au-dessus de la zone de combustion (2) et comprend une enceinte avec au moins une conduite d'admission (4) dudit mélange, une conduite d'évacuation (5) située en partie inférieure de l'enceinte et une conduite de sortie (6) située en partie supérieure de l'enceinte, ledit séparateur de particules (1) comprenant une phase diluée en partie supérieure de l'enceinte et une phase dense en partie inférieure de l'enceinte, ladite conduite d'admission (4) débouchant de manière axiale directement dans le séparateur de particules (1), dans la phase diluée en partie supérieure de l'enceinte dudit séparateur de particules (1), les paramètres d'admission et d'évacuation/sortie étant choisis pour créer dans l'enceinte ladite phase dense en partie inférieure et ladite phase diluée en partie supérieure;
   - le séparateur gaz-solide (3) est alimenté par ladite conduite de sortie (6) et comprend une conduite (10) pour évacuer un gaz appauvri en particules légères d'imbrûlés, et une conduite (9) de communication avec la zone de combustion (2) pour recycler les particules d'imbrûlés vers la zone de combustion (2).

2. Dispositif selon la revendication 1, dans lequel l'enceinte du séparateur (1) comprend en outre une conduite d'alimentation (11) pour un gaz provenant d'une source externe.

3. Dispositif selon l'une des revendications précédentes, dans lequel ladite conduite d'admission (4) pénètre dans l'enceinte de manière sensiblement axiale et d'une longueur comprise entre 1 à 5 fois le diamètre de l'enceinte.

4. Dispositif selon l'une des revendications précédentes, dans lequel la conduite d'admission pénètre par la partie inférieure de l'enceinte.

5. Dispositif selon l'une des revendications précédente dans lequel la partie inférieure de l'enceinte comprend un espace annulaire (200) entre la paroi externe de la conduite d'admission (4) et la paroi du séparateur.

6. Dispositif selon la revendication 1, dans lequel la zone de combustion (2) comprend au moins une conduite d'alimentation (7) en charge solide, une conduite d'alimentation (8) en particules de porteur d'oxygène, une conduite d'alimentation (17) en gaz de fluidisation, pour former ledit mélange gazeux.

7. Procédé de combustion en boucle chimique utilisant un combustible solide générant des particules d'imbrûlés, mettant en oeuvre des particules de porteur d'oxygène, telles que des oxydes métalliques, et mettant en oeuvre un dispositif selon l'une des revendications 1 à 6, procédé selon lequel :

   - on admet un mélange gazeux provenant de ladite zone de combustion (2), comprenant des particules et des gaz de combustion, dans l'enceinte du séparateur de particules (1) par une conduite d'admission (4) débouchant de manière axiale directement dans le séparateur de particules (1),
   - on extrait les particules les plus légères par une sortie (6) en partie haute de ladite enceinte et on évacue les particules les plus lourdes par une sortie (5) en partie basse de ladite enceinte, les paramètres d'admission et d'extraction étant choisis pour créer dans l'enceinte la phase dense inférieure et la phase diluée supérieure, phase diluée dans laquelle est admise ledit mélange par la conduite d'admission (4);
   - on envoie le mélange constitué majoritairement de particules légères d'imbrûlés extrait par la sortie (6) en partie haute de l'enceinte vers un séparateur gaz-particules (3),
   - on évacue du séparateur gaz-particules (3) un gaz appauvri en particules d'imbrûlés par une conduite (10),
   - on recycle les particules d'imbrûlés vers la zone de combustion (2) par une conduite de communication (9).

8. Procédé selon la revendication 7, selon lequel l'enceinte du séparateur (1) est alimentée par un gaz provenant d'une source externe (11).

9. Procédé selon la revendication 7 selon lequel la vitesse superficielle du gaz dans la phase diluée de l'enceinte du dispositif est fixée à une valeur comprise entre 30 et 300% de la vitesse terminale de chute moyenne des particules de porteur d'oxygène.

10. Procédé selon la revendication 9, selon lequel la vitesse superficielle du gaz dans la phase diluée de l'enceinte du dispositif est fixée à une valeur comprise entre 75 et 125% de la vitesse terminale de chute moyenne des particules de porteur d'oxygène.

11. Procédé selon la revendication 7, selon lequel la vitesse du gaz dans la partie supérieure de la zone de combustion (2) est comprise entre 3 et 10 m/s.

12. Procédé selon l'une des revendications 7 à 11, selon lequel l'enceinte est alimentée par un gaz provenant d'une source externe représentant moins de 20% du débit de gaz total dans le séparateur.

13. Procédé selon l'une des revendications 7 à 12, selon lequel la zone de combustion (2) opère en lit fluidisé en phase dense dont les particules sont transportées vers le séparateur (1), le transport étant contrôlé par une vanne en L.

14. Procédé selon l'une des revendications 7 à 13, selon lequel la zone de combustion (2) opère en lit fluidisé en phase dense dont les particules sont transportées vers le séparateur (1) au travers d'un séparateur gaz/solide (12) à la sortie duquel les particules s'écoulent à l'intérieur du séparateur (1).

**Patentansprüche**

1. Verbrennungsvorrichtung in einer chemischen Schleife, die einen festen Brennstoff verwendet, Rußpartikel erzeugt und Sauerstoff tragende Partikel, wie Metalloxide, einsetzt, und umfassend mindestens eine Verbrennungszone (2), einen Separator (1) der in einem von der Verbrennungszone kommenden Gasgemisch enthaltenen Partikel und einen Gas-Feststoff-Separator (3), wobei:

- der Partikelseparator (1) über der Verbrennungszone (2) angeordnet ist und einen Raum mit mindestens einer Einlassleitung (4) des Gemisches, einer Ablassleitung (5), die sich im unteren Teil des Raums befindet, und einer Ausgangsleitung (6), die sich im oberen Teil des Raums befindet, umfasst, wobei der Partikelseparator (1) eine verdünnte Phase im oberen Teil des Raums und eine dichte Phase im unteren Teil des Raums umfasst, wobei die Einlassleitung (4) axial direkt in den Partikelseparator (1) in die verdünnte Phase im oberen Teil des Raums des Partikelseparators (1) mündet, wobei die Einlass- und Ablass-/Ausgangsparameter derart gewählt sind, dass in dem Raum die dichte Phase im unteren Teil und die verdünnte Phase im oberen Teil erzeugt wird;
- der Gas-Feststoff-Separator (3) von der Ausgangsleitung (6) versorgt wird und eine Leitung (10), um ein an leichten Rußpartikeln armes Gas abzuleiten, und eine Verbindungsleitung (9) mit der Verbrennungszone (2) umfasst, um die Rußpartikel zu der Verbrennungszone (2) wiederzuverwerten.

2. Vorrichtung nach Anspruch 1, bei dem der Raum des Separators (1) ferner eine Zuführleitung (11) für ein von einer externen Quelle kommendes Gas umfasst.

3. Vorrichtung nach einem der vorhergehenden Ansprüche, bei der die Einlassleitung (4) in den Raum im Wesentlichen axial und mit einer Länge zwischen 1- bis 5-mal den Durchmesser des Raums eindringt.

4. Vorrichtung nach einem der vorhergehenden Ansprüche, bei der die Einlassleitung über den unteren Teil des Raums eindringt.

5. Vorrichtung nach einem der vorhergehenden Ansprüche, bei der der untere Teil des Raums einen ringförmigen Bereich (200) zwischen der Außenwand der Einlassleitung (4) und der Wand des Separators umfasst.

6. Vorrichtung nach Anspruch 1, bei der die Verbrennungszone (2) mindestens eine Zuführleitung (7) einer Feststoffladung, eine Zuführleitung (8) von Sauerstoff tragenden Partikeln, eine Zuführleitung (17) von Fluidisierungsgas umfasst, um das Gasgemisch zu bilden.

7. Verbrennungsverfahren in einer chemischen Schleife, das einen festen Brennstoff verwendet, Rußpartikel erzeugt und Sauerstoff tragende Partikel, wie Metalloxide, einsetzt, und eine Vorrichtung nach einem der Ansprüche 1 bis 6 einsetzt, wobei bei dem Verfahren:

- ein von der Verbrennungszone (2) kommendes Gasgemisch, umfassend Partikel und Verbrennungsgase, in den Raum des Partikelseparators (1) durch eine Einlassleitung (4), die axial direkt in den Partikelseparator (1) mündet, eingelassen wird,
- die leichtesten Partikel durch einen Ausgang (6) im oberen Teil des Raums extrahiert werden, und die schwersten Partikel durch einen Ausgang (5) im unteren Teil des Raums abgeleitet werden, wobei die Einlass- und Extraktionsparameter derart gewählt sind, dass in dem Raum die dichte untere Phase und die verdünnte obere Phase erzeugt werden, wobei in die verdünnte Phase das Gemisch durch die Einlassleitung (4) eingelassen wird;
- das mehrheitlich von leichten Rußpartikeln gebildete Gemisch, das durch den Ausgang (6) im oberen Teil des Raums extrahiert wird, zu einem Gas-Partikel-Separator (3) geschickt wird,
- aus dem Gas-Partikel-Separator (3) ein an Rußpartikeln armes Gas durch eine Leitung (10) abgeleitet wird,
- die Rußpartikel zu der Verbrennungszone (2) durch eine Verbindungsleitung (9) wiederverwertet werden.

8. Verfahren nach Anspruch 7, bei dem der Raum des Separators (1) mit einem von einer externen Quelle (11) kommenden Gas versorgt wird.

9. Verfahren nach Anspruch 7, bei dem die Oberflächengeschwindigkeit des Gases in der verdünnten Phase des Raums der Vorrichtung auf einen Wert zwischen 30 und 300 % der durchschnittlichen Endfallgeschwindigkeit der Sauerstoff tragenden Partikel festgesetzt wird.

10. Verfahren nach Anspruch 9, bei dem die Oberflächengeschwindigkeit des Gases in der verdünnten Phase des Raums der Vorrichtung auf einen Wert zwischen 75 und 125 % der durchschnittlichen Endfallgeschwindigkeit der Sauerstoff tragenden Partikel festgesetzt wird.

11. Verfahren nach Anspruch 7, bei dem die Geschwindigkeit des Gases im oberen Teil der Verbrennungszone (2) zwischen 3 und 10 m/s beträgt.

12. Verfahren nach einem der Ansprüche 7 bis 11, bei dem der Raum mit einem von einer externen Quelle kommenden Gas versorgt wird, das weniger als 20 % der Gesamtgasmenge im Separator darstellt.

13. Verfahren nach einem der Ansprüche 7 bis 12, bei dem die Verbrennungszone (2) im Wirbelbett in dichter Phase arbeitet, dessen Partikel zum Separator (1) transportiert werden, wobei der Transport durch ein L-förmiges Ventil kontrolliert wird.

14. Verfahren nach einem der Ansprüche 7 bis 13, bei dem die Verbrennungszone (2) im Wirbelbett in dichter Phase arbeitet, dessen Partikel zum Separator (1) über einen Gas/Feststoff-Separator (12) transportiert werden, an dessen Ausgang die Partikel in das Innere des Separators (1) abfließen.

## Claims

1. A chemical-looping combustion device utilizing a solid fuel generating unburnt particles and using oxygen-carrying particles such as metallic oxides, and comprising at least one combustion zone (2), a separator (1) for the particles contained in a gaseous mixture coming from said combustion zone, and a gas-solid separator (3) wherein:

   - the particle separator (1) is arranged above combustion zone (2) and comprises an enclosure with at least one intake line (4) for said mixture, a discharge line (5) arranged in the lower part of the enclosure and an outlet line (6) arranged in the upper part of the enclosure, said particle separator (1) comprising a dilute phase in the upper part of the enclosure and a dense phase in the lower part of the enclosure, said intake line (4) opens axially directly into the particle separator (1), into the dilute phase in the upper part of the enclosure of said particle separator (1), the intake and discharge/outlet parameters being so selected as to create in the enclosure said dense phase in the lower part and said dilute phase in the upper part,
   - gas-solid separator (3) is fed through said outlet line (6) and comprises a line (10) for discharging a gas depleted in light unburnt particles and a line (9) communicating with combustion zone (2) for recycling the unburnt particles to combustion zone (2).

2. A device as claimed in claim 1, wherein the enclosure of separator (1) also comprises a delivery line (11) for feeding a gas coming from an external source.

3. A device as claimed in any one of the previous claims, wherein said intake line (4) opens into the enclosure in a substantially axial manner and by a length ranging between 1 and 5 times the diameter of the enclosure.

**4.** A device as claimed in any one of the previous claims, wherein the intake line opens into the enclosure in the lower part thereof.

**5.** A device as claimed in any one of the previous claims, wherein the lower part of the enclosure comprises an annular space (200) between the external wall of intake line (4) and the wall of the separator.

**6.** A device as claimed in claim 1, wherein combustion zone (2) comprises at least one solid feedstock delivery line (7), an oxygen-carrying particle delivery line (8), a fluidization gas delivery line (17), so as to form said gaseous mixture.

**7.** A chemical-looping combustion method utilizing a solid fuel generating unburnt particles and using oxygen-carrying particles such as metallic oxides, and using a device according to any one of claims 1 to 6, said method comprising:

- allowing a gaseous mixture coming from said combustion zone (2), comprising combustion gas and particles, into the enclosure of the particle separator (1), through an intake line (4) opening axially directly into the particle separator (1),
- extracting the lighter particles through an outlet (6) in the upper part of said enclosure and discharging the heavier particles through an outlet (5) in the lower part of said enclosure, the intake and extraction parameters being so selected as to create in the enclosure said lower dense phase and said upper dilute phase, the dilute phase into which said mixture is allowed through the intake line (4),
- sending the mixture predominantly consisting of light unburnt particles extracted through outlet (6) in the upper part of the enclosure to a gas-particle separator (3),
- discharging from gas-particle separator (3) a gas depleted in unburnt particles through a line (10),
- recycling the unburnt particles to combustion zone (2) through a communication line (9).

**8.** A method as claimed in claim 7, wherein the enclosure of separator (1) is fed with a gas coming from an external source (11).

**9.** A method as claimed in claim 7, wherein the superficial velocity of the gas in the dilute phase of the enclosure of the device is set at a value ranging between 30 and 300 % of the mean terminal settling velocity of the oxygen-carrying particles.

**10.** A method as claimed in claim 9, wherein the superficial velocity of the gas in the dilute phase of the enclosure of the device is set at a value ranging between 75 and 125 % of the mean terminal settling velocity of the oxygen-carrying particles.

**11.** A method as claimed in claim 7, wherein the velocity of the gas in the upper part of combustion zone (2) ranges between 3 and 10 m/s.

**12.** A method as claimed in any one of claims 7 to 11, wherein the enclosure is fed with a gas coming from an external source representing less than 20 % of the total gas flow in the separator.

**13.** A method as claimed in any one of claims 7 to 12, wherein combustion zone (2) operates in dense-phase fluidized bed mode, the particles thereof being transported to separator (1), transport being controlled by an L-type valve.

**14.** A method as claimed in any one of claims 7 to 13, wherein combustion zone (2) operates in dense-phase fluidized bed mode, the particles thereof being transported to separator (1) through a gas/solid separator (12) at the outlet of which the particles flow into separator (1).

Figure 1

Figure 2

Figure 3

Figure 4

**Figure 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2850156
- FR 2896709
- FR 2556983 A1

- WO 2009121713 A1
- EP 0211483 A2